**Europäisches Patentamt**

**European Patent Office**

**Office européen des brevets**

(19)

(11) Veröffentlichungsnummer : **0 344 417 B1**

(12) # EUROPÄISCHE PATENTSCHRIFT

(45) Veröffentlichungstag der Patentschrift :
**21.10.92 Patentblatt 92/43**

(51) Int. Cl.⁵ : **B65G 51/03**

(21) Anmeldenummer : **89104833.2**

(22) Anmeldetag : **17.03.89**

(54) **Vorrichtung zum Transportieren von Flaschen.**

(30) Priorität : **01.06.88 DE 8807146 U**

(43) Veröffentlichungstag der Anmeldung :
**06.12.89 Patentblatt 89/49**

(45) Bekanntmachung des Hinweises auf die
Patenterteilung :
**21.10.92 Patentblatt 92/43**

(84) Benannte Vertragsstaaten :
**DE FR GB IT**

(56) Entgegenhaltungen :
**DE-U- 8 511 882**
**DE-U- 8 807 146**
**FR-A- 2 531 048**
**US-A- 4 284 370**

(73) Patentinhaber : **HOLSTEIN UND KAPPERT AKTIENGESELLSCHAFT**
**Juchostrasse 20**
**W-4600 Dortmund 1 (DE)**

(72) Erfinder : **Karass, Hans-Joachim**
**Quarzweg 10**
**W4600 Dortmund 30 (DE)**

EP 0 344 417 B1

Jouve, 18, rue Saint-Denis, 75001 PARIS

## Beschreibung

Die Neuerung bezieht sich auf eine Vorrichtung zum Transportieren von Flaschen, insbesondere von Kunststofflaschen mit einem in deren Mündungsbereich angeordneten Unterstützungskragen, welcher von entsprechend ausgebildeten Führungsbahnen hängend aufgenommen wird, wobei unterhalb des Unterstützungskragens beidseitig angeordnete Druckluftdüsenkanäle mit sich im Bewegungsrichtung der Flaschen öffnenden Düsen vorgesehen sind.

Derartige Vorrichtungen dienen insbesondere zum schnellen Transport von leichtgewichtigen Kunststofflaschen zwischen dem Bereich einer Bevorratungsstelle und den nachfolgenden Behandlungsmaschinen. Solche Förderer bestehen aus einer Führungsbahn und z.B. einem unmittelbar daran angrenzenden, gegen den Mündungsbereich der zu transportierenden Flaschen gerichteten Druckluftdüsenkanal. Hierbei strömt die Druckluft unmittelbar gegen den Mündungs- bzw. Schulterbereich der zu transportierenden Flaschen und hat hier eine relativ geringe Angriffsfläche, so daß ein hoher Luftstrom zur Bewegung der einzelnen Flaschen erforderlich ist. Andererseits ist mit der Zuordnung der Luftdüsen unmittelbar im Bereich der Flaschenmündung, insbesondere in Betrieben der Getränkeindustrie, die Gefahr einer Infektion des späteren Flascheninhaltes nicht auszuschließen, was insbesondere bei empfindlichen Getränken, die anschließend in einer Füllmaschine in die Flasche gefüllt werden, erhebliche Probleme verursachen kann.

Man hat auch bereits vorgeschlagen, daß die Führungsbahn oberhalb und auf Abstand zu je einem auf beiden Seiten des Förderweges der Flaschen befindlichen Druckluftdüsenkanals angeordnet ist und diese Düsenkanäle einen Abstand zueinander aufweisen, der deutlich größer als der Durchmesser der zu transportierenden Flaschen ist, wobei unterhalb dieser Düsenkanäle die seitliche Bewegungsbahn der Flaschen begrenzende Führungsleisten angeordnet sind (DE-U-8511882).

Mit dieser bekannten Ausgestaltung wurden bereits gegenüber dem erstgenannten Stand der Technik weitere Verbesserungen erzielt. Insbesondere konnten nunmehr unterschiedliche Flaschen in beliebiger Größe mit ein und derselben Vorrichtung erarbeitet werden, ohne daß eine direkte Beaufschlagung des Mündungsbereiches und die damit verbundene Infektionsgefahr beim nachfolgenden Befüllen gegeben war. Nachteilig ist bei dieser Vorrichtung, daß die Düsen relativ weit von der eigentlichen Auflagefläche bzw. der Gleitebene des Unterstützungskragens entfernt sind und dadurch häufig durch die tiefliegende Angriffsfläche ein Verkanten der Flaschen während des Transports verursachen. Dieses führt dazu, daß immer wieder verkantete Flaschen gelöst werden müssen, um damit den Weitertransport der gesamten nachfolgenden Flaschen wieder zu ermöglichen. Ein weiterer Nachteil ist bei dieser Vorrichtung darin zu sehen, daß insbesondere einzelne Flaschen, die auf Abstand zu der vorhergehenden oder nachfolgenden Reihe in der Transportbahn gehalten sind, besonders schnell verkanten und damit automatisch eine Behinderung der nachfolgenden Flaschen verursachen.

Der Neuerung liegt nun die Aufgabe zugrunde, die eingangs genannten Nachteile und insbesondere ein Verkanten von Flaschen auszuschalten, ohne daß die gewünschten biologischen Forderungen darunter leiden.

Diese der Neuerung zugrundeliegende Aufgabe wird bei einer Vorrichtung zum Transportieren der aus der DE-U- 8511 882 bekannten und im Oberbegriff des Anspruchs 1 berücksichtigten Art dadurch gelöst, daß die Druckluftdüsenkanäle mit ihren von den Düsen besetzten Fläche schräg entsprechend der mündungsseitigen Flaschenschulter verlaufen und ein und mindestens eine zusätzliche Düsenreihe vorgesehen ist, deren wirksame Austrittsrichtung schräg und/oder rechtwinklig nach oben verläuft.

Bevorzugte Ausgestaltungen der Neuerung ergehen aus den Unteransprüchen und der nachfolgenden Beschreibung.

Mit der vorgeschlagenen Ausgestaltung werden die Flaschen an optimaler Stelle beaufschlagt, ohne daß dabei ein allzu großer Verlust der aufzubringenden Druckluftströmung festgestellt werden kann. Darüber hinaus werden die Flaschen durch die zusätzliche, im wesentlichen nach oben gerichtete Düsenreihe in ihrer Aufhängung von unten unterstützt und auf diese Weise praktisch auf einem Luftkissen getragen, wodurch einerseits eine geringe Strömungskapazität zum eigentlichen Transport benötigt wird und andererseits ein Verkanten einzelner Flaschen verhindert wird.

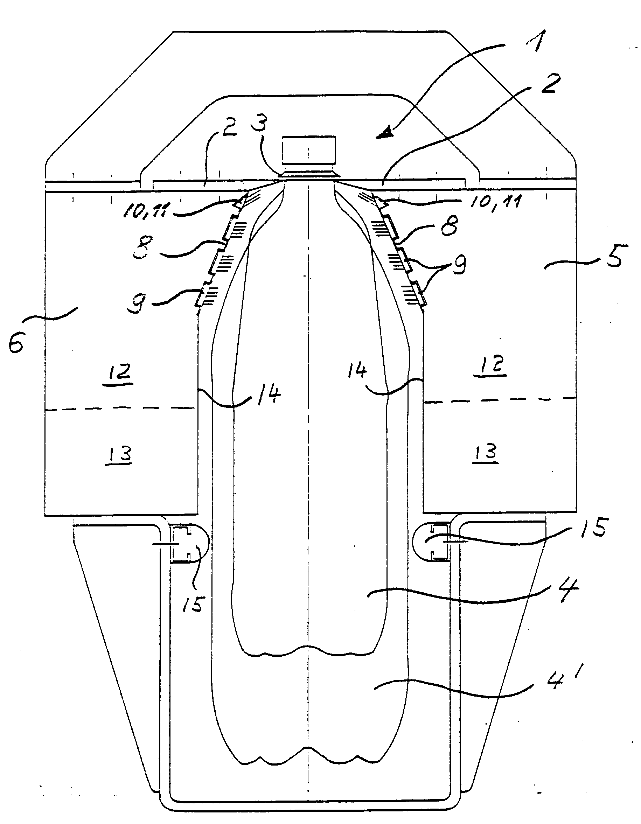

Im nachfolgenden wird die Neuerung anhand eines in der Zeichnung dargestellten Ausführungsbeispiels näher erläutert.

Gemäß der einzigen Figur besteht die Vorrichtung aus einer Führungsbahn 1, die zweckmäßig aus zwei auf Abstand zueinander angeordneten und durchlaufenden Kunststoffschienen 2 gebildet ist und zur Aufnahme eines Unterstützungskragens 3 von Kunststoffflaschen 4 dient. Unterhalb und auf Abstand dazu sind aufeinander gegenüberliegenden Seiten der Bewegungsbahn der Kunststofflaschen 4 Druckluftdüsenkanäle 5, 6 angeordnet. Diese bestehen zweckmäßig aus der Flaschenschulter angepaßten und ebenfalls schräggerichteten Düsenflächen 8, die ein oder mehrere sich in Bewegungsrichtung der Flaschen öffnende Düsen 9 aufweisen. Diese Düsen 9 sind in einer Reihe hintereinander angeordnet. Mehrere solcher untereinander verlaufender Düsenreihen können vorgesehen sein. Zusätzlich zu diesen in Bewegungsrichtung sich erstreckenden und wirksamen Düsen 9 sind in einer darüber befindlichen weiteren Reihe 10 auf Abstand zueinander und schräg nach oben gerichtete Düsen 11 vorgesehen. Die Anzahl dieser Düsen 11 kann geringer sein als die in der betreffenden Düsenreihe, die für den eigentlichen Transport der Kunststofflaschen 4 vorgesehen ist.

Die Düsen 8, 9 selbst sind an der zu den Kunststofflaschen 4 weisenden Wand bzw. Düsenflächen 8 einer Düsenkammer 12 angeordnet. Diese Düsenkammer 12 steht in Verbindung mit einer darunter befindlichen Druckluftzuführungskammer 13, die zweckmäßig von einem gemeinsamen Druckluftgebläse oder dgl. ansteuerbar ist.

Die sich einander gegenüberliegenden Seitenwände 14 dieser Druckluftkammern 12 nehmen geeignete Führungsleisten 15 auf, die ein Pendeln der Flaschen 4 quer zur Transportrichtung im wesentlichen ausschließen.

Die Führungsbahn 1, auf der der betreffende Unterstützungskragen 3 der Kunststofflaschen 4 aufliegt bzw. gleitet, sind austauschbar in U-förmigen Schienen 16 an dem Druckluftdüsenkanal gehalten und können beispielsweise aus einem gleitfähigen Kunststoff oder dgl. gebildet sein.

Die zu transportierenden Flaschen 4 werden von einem Vorratsbereich dem Kanal übergeben und dann durch die in Bewegungsrichtung ausgerichteten Düsen 9 bzw. dem daraus austretenden Luftstrom weitertransportiert. Die zusätzlich vorgesehene obere Düsenreihe 10 dient dabei zur geringfügigen Anhebung des Unterstützungskragens 3 von der Führungsbahn 1 und verursacht damit ein praktisch störungsfreies Gleiten dieses Kragens auch über eine lange Distanz und in gleicher vorteilhafter Weise auch einer einzelnen Flasche, so daß die eingangs beschriebenen Verkantungen vermieden werden.

## Patentansprüche

1. Vorrichtung zum Transportieren von Flaschen, insbesondere von Kunststofflaschen mit einem in deren Mündungsbereich angeordneten Unterstützungskragen, welcher von entsprechend ausgebildeten Führungsbahnen hängend aufgenommen wird, wobei unterhalb des Unterstützungskragens beidseitig angeordnet Druckluftdüsenkanäle mit sich im Bewegungsrichtung der Flaschen öffnenden Düsen vorgesehen sind, dadurch gekennzeichnet, daß die Druckluftdüsenkanäle (5, 6) mit ihren von den Düsen (9) besetzten Flächen (8) schräg entsprechend der mündungsseitigen Flaschenschulter verlaufen und mindestens eine zusätzliche obere Düsenreihe (10,11) vorgesehen ist, deren wirksame Austrittsrichtung schräg oder rechtwinklig nach oben verläuft.

2. Vorrichtung nach Anspruch 1, dadurch gekennzeichnet, daß die Anzahl der wirksamen oberen Düsen (10,11) im Verhältnis zu den in Bewegungsrichtung wirksamen Düsen (9) einer darunter befindlichen Reihe geringer ist.

3. Vorrichtung nach Anspruch 1, dadurch gekennzeichnet, daß die Führungsbahn (1) an dem Druckluftdüsenkanal austauschbar gehalten und aus einem gleitfähigen Kunststoff gebildet ist.

## Claims

1. Apparatus for the conveyance of bottles, more especially plastics material bottles having a supporting collar, which is disposed in the mouth region of said bottles and is received, in suspended form, by appropriately formed guide paths, compressed-air nozzle ducts being provided on both sides beneath the supporting collar, characterised in that the surfaces (8) of the compressed-air nozzle ducts (5, 6), occupied by the nozzles (9) which open in the direction of movement of the bottles, extend inclinedly so as to correspond to the shoulder at the mouth end of the bottle, and at least one additional, upper row of nozzles (10, 11) is provided, the operative discharge direction of which extends inclinedly or at right angles upwardly.

2. Apparatus according to claim 1, characterised in that the number of operative, upper nozzles (10, 11) is smaller than the number of nozzles (9) in a row situated therebeneath, which are operative in the direction of movement.

3. Apparatus according to claim 1, characterised in that the guide path (1) isinterchangeably retained at the compressed-air nozzle duct and is formed from a slidable plastics material.

## Revendications

1. Dispositif de transport de bouteilles, en particulier de bouteilles en matière synthétique, comportant un collet disposé dans la zone de leur embouchure, soutenu en suspension par des glissières de guidage correspondantes, des canaux de buses à air comprimé étant prévus des deux côtés, en-dessous du collet de support, caractérisé en ce que les surfaces (8) comportant des buses (9) des canaux de buses à air (5, 6) s'étendent de façon oblique, de façon correspondante à l'épaulement de la bouteille situé du côté de l'embouchure, au moins une rangée supérieure supplémentaire de buses (10, 11) étant prévue, dont la direction effective de sortie s'étend vers le haut en oblique et/ou à angle droit.

2. Dispositif selon la revendication 1, caractérisé en ce que le nombre des buses supérieures actives (10, 11) est inférieur au nombre de buses actives en direction du déplacement (9) d'une rangée située en-dessous.

3. Dispositif selon la revendication 1, caractérisé en ce que la glissière de guidage (1) est montée interchangeable au niveau du canal de buses à air comprimé et est constituée en un matériau favorisant le glissement.